# EUROPEAN PATENT APPLICATION

(11) **EP 4 415 287 A1**
(43) Date of publication of application: **14.08.2024**
(21) Application number: 24155778.4
(22) Date of filing: 05.02.2024
(51) Int. Cl.: H04B 10/114, H04B 10/116

(54) **COMMUNICATIONS USING WIRELESS OPTICAL SERIAL COMMUNICATIONS AND A HAND-HELD DEVICE**

(30) Priority: 10.02.2023 US 202318167785
(71) Applicant: Hamilton Sundstrand Corporation, Charlotte, NC 28217-4578 (US)
(72) Inventor: GADOW, Ronald J., Stillman Valley, IL 61084 (US)
(74) Representative: Dehns

(57) **Abstract**

A line replaceable unit (LRU) communications system is provided and includes an emitter (110), a hand-held device (130) including a camera (134) and a device processor (135) and a control unit (120) of one or more pieces of equipment (1201-n). The control unit (120) includes a housing (121) on which the emitter (110) is disposed and an LRU processor (122). The LRU processor (122) is configured to identify the hand-held device (130) and a maximum frame rate of the camera (134), to ascertain a status of the one or more pieces of equipment (1201-n), to control the emitter (110) to emit radiation in a sequence defined in accordance with the status and to limit a rate at which the radiation is emitted in the sequence by the maximum frame rate of the camera (134). The camera (134) is configured to capture the radiation and the device processor (135) is configured to translate the sequence into interpretable serial data for use in determining the status.

## Description

### BACKGROUND

The present disclosure relates to line replaceable units (LRUs) and, in particular, to an LRU communications approach using wireless optical serial communications and a hand-held device, such as a smart phone or tablet.

Acquiring data from controllers, such as fault data from controllers, currently requires some specialized equipment that isn't always on-hand. Most solutions require a harness plugged into the unit through a chassis "door" that must be opened using a tool or alteration of a wire harness to access unused pins in a connector. Attaching a harness to the unit in some cases, such as production testing cases, has resulted in robustness issues with the connector interface to the unit.

### SUMMARY

According to an aspect of the disclosure, a line replaceable unit (LRU) communications system is provided and includes an emitter, a hand-held device including a camera and a device processor and a control unit of one or more pieces of equipment. The control unit includes a housing on which the emitter is disposed and an LRU processor. The LRU processor is configured to identify the hand-held device and a maximum frame rate of the camera, to ascertain a status of the one or more pieces of equipment, to control the emitter to emit radiation in a sequence defined in accordance with the status and to limit a rate at which the radiation is emitted in the sequence by the maximum frame rate of the camera. The camera is configured to capture the radiation and the device processor is configured to translate the sequence into interpretable serial data for use in determining the status.

In accordance with additional or alternative embodiments, the hand-held device includes one or more of a smartphone, a tablet and a portable computing device.

In accordance with additional or alternative embodiments, the control unit includes a label with one or more part numbers of the one or more pieces of equipment, the camera is configured to capture an image of the one or more part numbers and the device processor is configured to recognize the one or more part numbers from the image and to translate the sequence into the interpretable serial data for use in determining the status by reference to the one or more part numbers in a database.

In accordance with additional or alternative embodiments, the emitter includes a light emitting diode (LED) and the LRU processor controls the LED to flash on and off in the sequence.

In accordance with additional or alternative embodiments, the LRU processor controls the emitter to continuously emit radiation in the sequence.

In accordance with additional or alternative embodiments, the LRU processor is configured to ascertain multiple statuses and to control the emitter to emit radiation in multiple sequences respectively defined in accordance with each of the multiple statuses.

In accordance with additional or alternative embodiments, the LRU processor is further configured to control the emitter to emit the radiation in a high-level serial sequence of the multiple sequences.

According to an aspect of the disclosure, a line replaceable unit (LRU) communications system is provided and includes an emitter, a receiver, a control unit of one or more pieces of equipment and a hand-held device. The control unit includes a housing on which the emitter and the receiver are disposed and an LRU processor. The hand-held device includes a camera, a flash and a device processor. The device processor is configured to control the flash to emit flash radiation for reception by the receiver. The LRU processor is configured to ascertain a status of the one or more pieces of equipment and to control the emitter to emit radiation in a sequence defined in accordance with the status upon reception of the flash radiation by the receiver. The device processor is further configured to capture the radiation and to translate the sequence into interpretable serial data for use in determining the status.

In accordance with additional or alternative embodiments, the hand-held device includes one or more of a smartphone, a tablet and a portable computing device.

In accordance with additional or alternative embodiments, the control unit includes a label with one or more part numbers of the one or more pieces of equipment, the camera is configured to capture an image of the one or more part numbers and the device processor is configured to recognize the one or more part numbers from the image and to translate the sequence into the interpretable serial data for use in determining the status by reference to the one or more part numbers in a database.

In accordance with additional or alternative embodiments, the emitter includes a light emitting diode (LED) and the LRU processor controls the LED to flash on and off in the sequence.

In accordance with additional or alternative embodiments, the device processor is configured to control the flash to emit flash radiation in a sequence that identifies the hand-held device and a maximum frame rate of the camera thereof to the LRU processor and the LRU processor controls the emitter to emit the radiation in the sequence at a rate which is limited by the maximum frame rate.

In accordance with additional or alternative embodiments, the LRU processor controls the emitter to continuously emit radiation in the sequence.

In accordance with additional or alternative embodiments, the LRU processor is configured to ascertain multiple statuses and to control the emitter to emit radiation in multiple sequences respectively defined in accordance with each of the multiple statuses.

In accordance with additional or alternative embodiments, the LRU processor is further configured to control the emitter to emit the radiation in a high-level serial sequence of the multiple sequences.

According to an aspect of the disclosure, a method of operating a line replaceable unit (LRU) communications system is provided and includes identifying a hand-held device comprising a camera and a device processor, ascertaining a status of one or more pieces of equipment, controlling an emitter disposed on a control unit of the one or more pieces of equipment to emit radiation toward the hand-held device in a sequence defined in accordance with the status and at a rate which is limited by a maximum frame rate of the camera, capturing the radiation by the camera and translating the sequence into interpretable serial data for use in determining the status by the device processor.

In accordance with additional or alternative embodiments, the method further includes capturing an image of one or more part numbers of the one or more pieces of equipment by the camera, recognizing the one or more part numbers from the image by the device processor and translating the sequence into the interpretable serial data for use in determining the status by reference to the one or more part numbers in a database by the device processor.

In accordance with additional or alternative embodiments, the controlling of the emitter includes controlling the emitter to continuously emit radiation in the sequence.

In accordance with additional or alternative embodiments, the ascertaining includes ascertaining multiple statuses and the controlling of the emitter includes controlling the emitter to emit radiation in multiple sequences respectively defined in accordance with each of the multiple statuses.

In accordance with additional or alternative embodiments, the controlling of the emitter further includes controlling the emitter to emit the radiation in a high-level serial sequence of the multiple sequences.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE SEVERAL VIEWS OF THE DRAWINGS

For a more complete understanding of this disclosure, reference is now made to the following brief description, taken in connection with the accompanying drawings and detailed description, wherein like reference numerals represent like parts:
FIG. 1 is a schematic illustration of a line replaceable unit (LRU) communications system in accordance with embodiments;
FIG. 2 is an enlarged view of a control unit of the LRU communications system of FIG. 1 in accordance with embodiments;
FIG. 3 is an enlarged view of a hand-held device of the LRU communications system of FIG. 1 in accordance with embodiments;
FIG. 4 is a schematic illustration of a database of serial information for various pieces of equipment of the LRU communications system of FIG. 1 in accordance with embodiments;
FIG. 5 is a flow diagram of a method of operating an LRU communications system in accordance with embodiments; and
FIG. 6 is a graphical flow diagram of a method of operating an LRU communications system with two-way communications in accordance with embodiments.

### DETAILED DESCRIPTION

One past example of a solution to the problem of acquiring data from a controller unit has been the use of a blinking light emitting diode (LED) on the controller unit. The LED blinks a certain number of times to convey a fault code. The user counts the number of blinks and then refers to a lookup table to determine the fault code being conveyed. While this has worked in the past to convey the fault code, the use of a blinking LED does not provide much data and acts like more of a go/no-go for the controller unit.

Thus, as will be described below, an LRU communications approach using wireless optical serial communications and a hand-held device is provided. An LED in a controller unit (i.e., near the nameplate) sends out serial data to the hand-held device, where the hand-held device can include or be provided as a smartphone, a tablet or a portable computing device. The camera on the hand-held device captures the flashes from the controller unit and translates this information into interpretable serial data. The camera can also be used to read the LRU part number (by, e.g., character recognition) from a label before interpreting the serial data through a database associated with that part number.

An application can be downloaded and installed in the hand-held device. This application would allow for the receiving and interpreting of LRU data. In some cases, the application can allow for sending/emailing data to a service center for further interrogation.

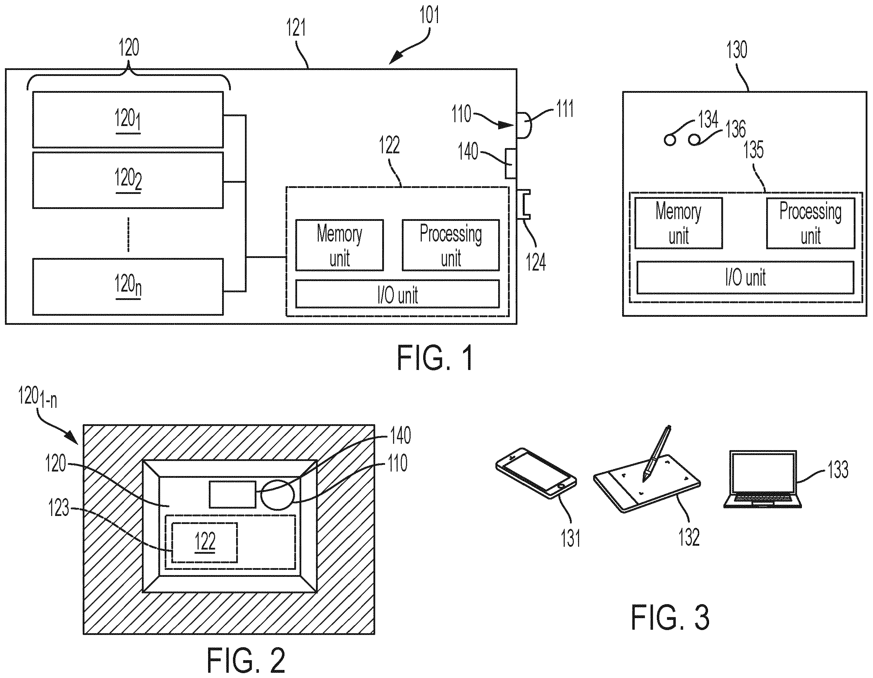

With reference to FIGS. 1-3, an LRU communications system 101 is provided and includes an emitter 110, a control unit 120 of one or more pieces of equipment 1201-n and a hand-held device 130. The emitter 110 can be any type of emitter capable of emitting radiation. For purposes of clarity and brevity, however, the following description will relate to the case of the emitter 110 being provided as an LED 111, which is configured to emit visible flashes of light. The control unit 120 includes a housing 121 on which the emitter 110 is operably disposed and an LRU processor 122. The LRU processor 122 is configured to ascertain a status of the one or more pieces of equipment 1201-n and to control the emitter 110 to emit radiation in a sequence defined by the LRU processor 122 in accordance with the status. The hand-held device 130 can include or be provided as one or more of a smartphone 131, a tablet 132 and a portable computing device, such as a laptop 133. In any case, the hand-held device 130 includes a camera 134 that is configured to capture the radiation and a device processor 135. The device processor 135 is configured to translate the sequence into interpretable serial data for use in determining the status of the one or more pieces of equipment 1201-n.

In accordance with embodiments, the one or more pieces of equipment 1201-n can represent circuit functions within the control unit 120 that are being tested/checked by the LRU processor 122. Additionally or alternatively, the control unit 120 can be manipulated by an operator to "wiggle" output signals and to read statuses on input signals. These output and input signals can be directed to/come from various pieces of equipment (i.e., of an aircraft), such as the one or more pieces of equipment 120l-n, which are external from the control unit 120.

In accordance with embodiments, the LRU communications system 101 can further include a receiver 140 and the hand-held device 130 can further include a flash 136. The receiver 140 is operably disposed on the housing 121 with the emitter 110 and is controllable by the LRU processor 122 to receive radiated signals, such as flash radiation from the flash 136.

The LRU processor 122 includes a memory unit, a processing unit and an input/output (I/O) unit by which the processing unit is communicative with the emitter 110 and the receiver 140. The memory unit has executable instructions stored thereon which are readable and executable by the processing unit. When these executable instructions are read and executed by the processing unit, the executable instructions cause the processing unit and the LRU processor 122 to operate as described herein. The device processor 135 includes a memory unit, a processing unit and an input/output (I/O) unit by which the processing unit is communicative with the camera 134 and the flash 136. The memory unit has executable instructions stored thereon (i.e., as part of an application stored on a smartphone) which are readable and executable by the processing unit. When these executable instructions are read and executed by the processing unit, the executable instructions cause the processing unit and the device processor 135 to operate as described herein.

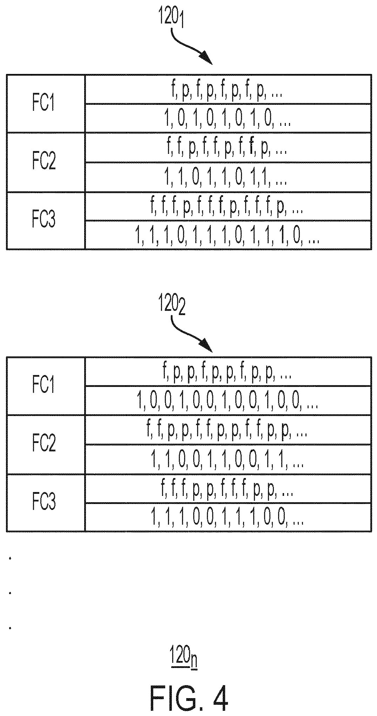

With continued reference to FIGS. 1-3 and with additional reference to FIG. 4, in an operation of the LRU communications system 101, the status of the piece of equipment 1201 could be any one of multiple fault conditions where each fault condition can be identified by a unique sequence of flashes and pauses between flashes of the emitter 110. Thus, as shown in FIG. 4, fault condition 1 could be identified by a sequence of alternating flashes and pauses that can be translated into alternating serial data of ones and zeroes, fault condition 2 could be identified by a sequence of alternating double flashes and single pauses that can be translated into alternating serial data of double ones and zeroes, fault condition 3 could be identified by a sequence of alternating triple flashes and single pauses that can be translated into alternating serial data of triple ones and zeroes, and so forth. Therefore, in an event the LRU processor 122 ascertains that fault condition 1 is in effect for the piece of equipment 1201, the LRU processor 122 controls the emitter 110 to execute the sequence of alternating flashes and pauses. Concurrently, the alternating flashes and pauses are captured by the camera 134 and translated by the device processor 135 into alternating serial data of ones and zeroes. The alternating serial data of the ones and zeroes can then be used by the device processor 135 or by a service center communicating with the hand-held device 130 to determine that the fault condition 1 is in effect for the piece of equipment 1201. This determination can thus be made without the door 123 of the housing 121 needing to be opened and without any connection of a tool to any of the circuitry within the housing 121.

In accordance with embodiments, the unique sequences noted above can further include parity checks and/or other encoding elements to ensure that the data can be received and interpreted correctly and to enable verification of validity of the data.

With reference back to FIG. 1, the control unit 120 can also include a label 124 that can be positioned relatively close to the emitter 110 and the receiver 140. The label 124 can have various items of information including, but not limited to, one or more part numbers of the one or more pieces of equipment 1201-n. In these cases, the camera 134 can be configured to capture an image of the label 124 and the one or more part numbers and the device processor 135 can be configured to recognize the one or more part numbers from the image and to translate the sequence into the interpretable serial data for use in determining the status by reference to the one or more part numbers in a database 401 (see FIG. 1).

As will be described in greater detail below, the emitter 110 can be controlled by the LRU processor 122 to emit the radiation in the sequence at a rate which is limited by a maximum frame rate of the camera 134. In these cases, the LRU processor 122 will be alerted to a type of the camera 134 and will have knowledge about the maximum frame rate thereof.

In accordance with embodiments, the LRU processor 122 can control the emitter 110 to continuously emit the radiation in the sequence or to discontinuously emit the radiation in the sequence. That is, in the former case, in an event the LRU processor 122 ascertains that fault condition 1 is in effect for the piece of equipment 1201, the LRU processor 122 controls the emitter 110 to continuously execute the sequence of alternating flashes and pauses.

In accordance with further embodiments, the LRU processor 122 can be configured to ascertain multiple statuses, to control the emitter 110 to emit radiation in multiple sequences respectively defined in accordance with each of the multiple statuses and to control the emitter 110 to emit the radiation in a high-level serial sequence of the multiple sequences. This high-level serial sequence can be continuously executed or discontinuously executed. That is, in the former case, in an event the LRU processor 122 ascertains that fault conditions 1 and 2 are both in effect for the piece of equipment 1201, the LRU processor 122 controls the emitter 110 to continuously execute the high-level serial sequence of the alternating flashes and pauses to represent the fault condition 1, followed by the alternating double flashes and single pauses to represent the fault condition 2, followed by the alternating flashes and pauses to again represent the fault condition 1, followed by the alternating double flashes and single pauses to again represent the fault condition 2, and so forth.

Where the LRU communications system 101 of FIGS. 1-3 includes the receiver 140 and the flash 136, a higher level of communication and interrogation is enabled between the control unit 120 and the hand-held device 130. For example, in these cases, the device processor 135 can be configured to control the flash 136 to emit flash radiation for reception by the receiver 140, upon this reception of the flash radiation by the receiver 140, the LRU processor 122 can ascertain the status of the one or more pieces of equipment 1201-n and to control the emitter 110 to emit the radiation in the sequence defined in accordance with the status. Here, the device processor 135 is further configured to capture the radiation and to translate the sequence into interpretable serial data for use in determining the status of the one or more pieces of equipment 1201-n.

Thus, in these cases, the control of the emitter 110 by the LRU processor 122 does not begin until the flash 136 is activated by the device processor 135. As such, even if the emitter 110 is controlled to continuously execute the sequence, waiting for the activation of the flash 136 can save power. Also, the device processor 135 can be configured to control the flash 136 to emit flash radiation in a sequence (as above) to thereby identify at least the hand-held device 130, the camera 134 and a maximum frame rate of the camera 134 to the LRU processor 122. The LRU processor 122 can then control the emitter 110 to emit the radiation in the sequence at a rate which is limited by the maximum frame rate of the camera 134. As an additional feature, the control unit 120 and the hand-held device 130 can communicate and interrogate one another using two-way communications enabled by the emitter 110, the receiver 140, the camera 134 and the flash 136. This two-way communication can eliminate the need for transmission of certain unnecessary data and in turn provide for bandwidth for the transmission of critical data that might otherwise not be transmissible.

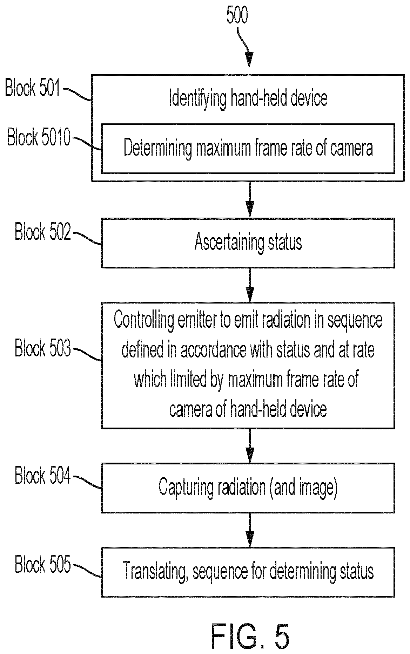

With reference to FIG. 5, a method 500 of operating an LRU communications system, such as the LRU communications system 110 described above, is provided. As shown in FIG. 5, the method 500 includes identifying a hand-held device including a camera and a device processor (block 501), which includes determining a maximum frame rate of the camera (block 5010), ascertaining a status (or multiple statuses - the description of the method 500 will refer to only a single status for purposes of clarity and brevity) of one or more pieces of equipment (block 502) and controlling an emitter disposed on a control unit of the one or more pieces of equipment to continuously or discontinuously emit radiation in a sequence defined in accordance with the status and at a rate which is limited by the maximum frame rate of the camera (block 503). The method 500 further includes capturing the radiation and, in some cases, an image of one or more part numbers of the one or more pieces of equipment by the camera (block 504) and translating the sequence, by the device processor, into interpretable serial data for use in determining the status, i.e., by reference to the one or more part numbers in a database (block 505). In accordance with embodiments, the capturing of the image of block 504 can further include reading two- or three-dimensional barcodes on a label (as described above).

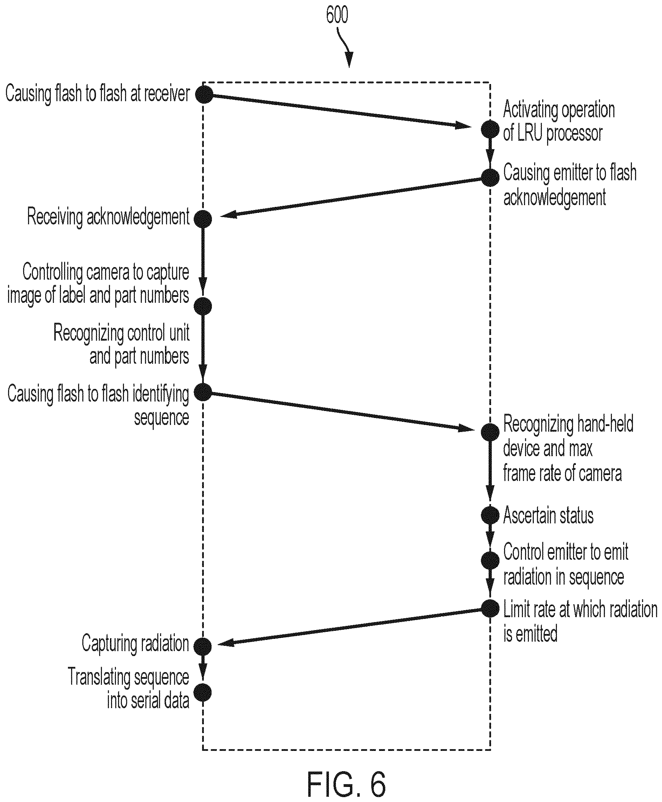

With reference to FIG. 6, a further method 600 of operating an LRU communications system with two-way communications, such as the LRU communications system 110 described above with two-way communication capability, is provided. As shown graphically in FIG. 6, the method 600 includes an initial operation in which the device processor 135 causes the flash 136 to flash at the receiver 140 which in turn activates an operation of the LRU processor 122 and the LRU processor 122 causes the emitter 110 to flash an acknowledgement response back to the camera 134. The acknowledgement response is received and the device processor 135 subsequently controls the camera 134 to capture an image of the label 124 and the one or more part numbers and uses the image to recognize the control unit 120 as well as the one or more part numbers. Having recognized the control unit 120, the device processor 135 causes the flash 136 to flash an identifying sequence, which identifies the hand-held device 130 to the control unit 120 and which may be customized for the control unit 120, at the receiver 140. At this point, the LRU processor 122 recognizes the hand-held device 130 and the maximum frame rate of the camera 134.

The LRU processor 122 proceeds to ascertain a status (again or multiple statuses - the description of the method 600 will refer to only a single status for purposes of clarity and brevity) of the one or more pieces of equipment 1201-n, to control the emitter 110 to emit radiation in a sequence defined in accordance with the status and to limit a rate at which the radiation is emitted in the sequence by the maximum frame rate of the camera 134. The device processor 135 controls the camera 134 to capture the radiation and translates the sequence into interpretable serial data for use in determining the status.

Technical effects and benefits of the present disclosure are the provision of an LRU communications approach using wireless optical serial communications and a hand-held device with low hardware costs. In addition, qualification aspects of the method do not involve certification and development complications of wireless radio frequency (RF) communications, such as Bluetooth ^{™} and WiFi.

The corresponding structures, materials, acts, and equivalents of all means or step-plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application, and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A line replaceable unit, LRU, communications system, comprising:
an emitter (110);
a hand-held device (130) comprising a camera (134) and a device processor (135); and
a control unit (120) of one or more pieces of equipment (1201-n), the control unit (120) comprising a housing (121) on which the emitter (110) is disposed and an LRU processor (122),
the LRU processor (122) being configured to identify the hand-held device (130) and a maximum frame rate of the camera (134), to ascertain a status of the one or more pieces of equipment (1201-n), to control the emitter (110) to emit radiation in a sequence defined in accordance with the status and to limit a rate at which the radiation is emitted in the sequence by the maximum frame rate of the camera (134),
the camera (134) being configured to capture the radiation, and
the device processor (135) being configured to translate the sequence into interpretable serial data for use in determining the status.

2. The LRU communications system according to claim 1, wherein the hand-held device (130) comprises one or more of a smartphone, a tablet and a portable computing device.

3. The LRU communications system according to claim 1 or 2, wherein:
the control unit (120) comprises a label with one or more part numbers of the one or more pieces of equipment (1201-n),
the camera (134) is configured to capture an image of the one or more part numbers, and
the device processor (135) is configured to recognize the one or more part numbers from the image and to translate the sequence into the interpretable serial data for use in determining the status by reference to the one or more part numbers in a database.

4. The LRU communications system according to any preceding claim, wherein the emitter (110) comprises a light emitting diode, LED, and the LRU processor (122) controls the LED to flash on and off in the sequence.

5. The LRU communications system according to any preceding claim, wherein the LRU processor (122) controls the emitter (110) to continuously emit radiation in the sequence.

6. The LRU communications system according to any preceding claim, wherein the LRU processor (122) is configured to ascertain multiple statuses and to control the emitter (110) to emit radiation in multiple sequences respectively defined in accordance with each of the multiple statuses, and preferably wherein the LRU processor (122) is further configured to control the emitter (110) to emit the radiation in a high-level serial sequence of the multiple sequences.

7. A line replaceable unit, LRU, communications system, comprising:
an emitter (110);
a receiver (140);
a control unit (120) of one or more pieces of equipment (1201-n), the control unit (120) comprising a housing (121) on which the emitter (110) and the receiver (140) are disposed and an LRU processor (122); and
a hand-held device (130) comprising a camera (134), a flash and a device processor (135),
the device processor (135) being configured to control the flash to emit flash radiation for reception by the receiver (140),
the LRU processor (122) being configured to ascertain a status of the one or more pieces of equipment (1201-n) and to control the emitter (110) to emit radiation in a sequence defined in accordance with the status upon reception of the flash radiation by the receiver (140), and
the device processor (135) being further configured to capture the radiation and to translate the sequence into interpretable serial data for use in determining the status.

8. The LRU communications system according to claim 7, wherein the hand-held device (130) comprises one or more of a smartphone, a tablet and a portable computing device.

9. The LRU communications system according to claim 7 or 8, wherein:
the control unit (120) comprises a label with one or more part numbers of the one or more pieces of equipment (1201-n),
the camera (134) is configured to capture an image of the one or more part numbers, and
the device processor (135) is configured to recognize the one or more part numbers from the image and to translate the sequence into the interpretable serial data for use in determining the status by reference to the one or more part numbers in a database.

10. The LRU communications system according to any of claims 7-9, wherein the emitter (110) comprises a light emitting diode, LED, and the LRU processor (122) controls the LED to flash on and off in the sequence; and/or wherein:
the device processor (135) is configured to control the flash to emit flash radiation in a sequence that identifies the hand-held device (130) and a maximum frame rate of the camera (134) thereof to the LRU processor (122), and
the LRU processor (122) controls the emitter (110) to emit the radiation in the sequence at a rate which is limited by the maximum frame rate; and/or
wherein the LRU processor (122) controls the emitter (110) to continuously emit radiation in the sequence.

11. The LRU communications system according to any of claims 7-10, wherein the LRU processor (122) is configured to ascertain multiple statuses and to control the emitter (110) to emit radiation in multiple sequences respectively defined in accordance with each of the multiple statuses, and preferably wherein the LRU processor (122) is further configured to control the emitter (110) to emit the radiation in a high-level serial sequence of the multiple sequences.

12. A method of operating a line replaceable unit (LRU) communications system, the method comprising:
identifying a hand-held device (130) comprising a camera (134) and a device processor (135);
ascertaining a status of one or more pieces of equipment (1201-n);
controlling an emitter (110) disposed on a control unit (120) of the one or more pieces of equipment (1201-n) to emit radiation toward the hand-held device (130) in a sequence defined in accordance with the status and at a rate which is limited by a maximum frame rate of the camera (134);
capturing the radiation by the camera (134); and
translating the sequence into interpretable serial data for use in determining the status by the device processor (135).

13. The method according to claim 12, further comprising:
capturing an image of one or more part numbers of the one or more pieces of equipment (1201-n) by the camera (134);
recognizing the one or more part numbers from the image by the device processor (135); and
translating the sequence into the interpretable serial data for use in determining the status by reference to the one or more part numbers in a database by the device processor (135).

14. The method according to claim 12 or 13, wherein the controlling of the emitter (110) comprises controlling the emitter (110) to continuously emit radiation in the sequence.

15. The method according to any of claims 12-14, wherein:
the ascertaining comprises ascertaining multiple statuses, and
the controlling of the emitter (110) comprises controlling the emitter (110) to emit radiation in multiple sequences respectively defined in accordance with each of the multiple statuses, and preferably wherein the controlling of the emitter (110) further comprises controlling the emitter (110) to emit the radiation in a high-level serial sequence of the multiple sequences.
